Europäisches Patentamt

European Patent Office

Office européen des brevets

(11) Veröffentlichungsnummer: **0 298 912**
**A1**

## (12) EUROPÄISCHE PATENTANMELDUNG

(21) Anmeldenummer: 88810377.7

(22) Anmeldetag: 08.06.88

(51) Int. Cl.⁴: **F 16 L 23/00**

(30) Priorität: 16.06.87 CH 2253/87

(43) Veröffentlichungstag der Anmeldung:
11.01.89 Patentblatt 89/02

(84) Benannte Vertragsstaaten:
AT CH DE FR IT LI

(71) Anmelder: **Nachmansohn, Samy**
**Erspachstrasse 26**
**CH-8932 Mettmenstetten (CH)**

(72) Erfinder: **Nachmansohn, Samy**
**Erspachstrasse 26**
**CH-8932 Mettmenstetten (CH)**

(54) **Rahmenverbindung für zwei Kanalabschnitte eines Luftschachtes.**

(57) Die Verbindung von Kanalabschnitten eines Luftschachtes ist arbeitsaufwendig und soll doch so ausgeführt werden, dass sie möglichst steif ist und grössere Kräfte aushält.

Die Erfindung bezweckt daher einerseits eine Vereinfachung der Herstellung und anderseits eine bessere Steifigkeit der Rahmenverbindung. Der U-förmige Teil der Rahmenprofile (17,18) - der die Wandenden der Kanalabschnitte (10,11) umgreift- wird aus zwei Schenkeln (22,23) gebildet, welche beide über zwei Stege (19,20) miteinander verbunden sind, die ihrerseits über einen Steg (21) miteinander verbunden sind.

EP 0 298 912 A1

Fig. 2

Bundesdruckerei Berlin

**Beschreibung**

## RAHMENVERBINDUNG FUER ZWEI KANALABSCHNITTE EINES LUFTSCHACHTES

Die Erfindung betrifft eine Rahmenverbindung für zwei Kanalabschnitte eines Kanales, insbesondere für einen Luftschacht mit zwei zusammenschraubbaren Rahmenprofilen, die an den Enden der Wände der Kanalabschnitte befestigbar sind, wobei die Rahmenprofile einen im Querschnitt U-förmigen Teil aufweisen.

Es sind solche Rahmenverbindungen bekannt, bei denen die Wandenden der Kanalabschnitte umgebogen sind und ein Schenkel des U-förmigen Teiles der Rahmenprofile in dieses umgebogene Wandende eingreift und verhindert, dass der Kanalabschnitt aus dem Rahmenprofil herausgleitet. Diese bekannte Rahmenverbindung hat den Nachteil, dass das Umbiegen der Wandenden der Kanalteile sehr viel Arbeit erfordert. Ferner ist es notwendig für den Transport der Kanalabschnitte die Rahmenprofile an den Kanalabschnitten zusätzlich zu befestigen, damit sie nicht herunterfallen solange die Kanalabschnitte noch nicht miteinander verbunden sind. Schliesslich ist noch nachteilig, dass beim Umbiegen der Wandenden der Kanalabschnitt sogenannte "Ausklinkungen"erforderlich sind, d.h. es müssen an gewissen Stellen der Kanälwände Aussparungen herausgeschnitten werden.

Die vorliegende Erfindung bezweckt diese Nachteile der bekannten Rahmenverbindungen zu vermeiden und eine Rahmenverbindung zu schaffen, bei welcher die Rahmenprofile beim Transport nicht von den Kanalabschnitten herunterfallen, ohne dass eine zusätzliche Befestigung z.B. durch Punktschweissen erforderlich ist. Insbesondere soll die Herstellung dieser Rahmenverbindung wesentlich vereinfacht werden.

Die Aufgabe, welche mit der vorliegenden Erfindung gelöst werden soll, besteht in der Schaffung einer Rahmenverbindung, welche wesentlich steifer ist als die bekannten Rahmenverbindungen, wodurch die Gefahr vermindert wird, dass sich der Rahmen in unerwünschter Weise aufbiegt.

Die erfindungsgemässe Rahmenverbindung ist dadurch gekennzeichnet, dass der U-förmige Teil der Rahmenprofile -der die Wandenden der Kanalabschnitte umgreift- aus zwei Schenkeln gebildet wird, die über zwei Stege miteinander verbunden sind, welche ihrerseits über einen Steg miteinander verbunden sind.

Vorzugsweise besitzt der eine Schenkel einen gegen die Kanalwand eingebogenen Falz, der einen Anschlag bildet und an der Kanalwand sind Nocken vorhanden, welche an dem Falz anliegen, um ein Herausgleiten der Kanalwand aus dem im Querschnitt U-förmigen Teil des Rahmenprofils zu verhindern.

Ferner besitzt der andere Schenkel vorzugsweise einen um die Kanalwand herumgebogenen Falz auf dem sich die Kanalwand abstützt, um die Rahmenverbindung zu versteifen. Ein Ausführungsbeispiel der erfindungsgemässen Rahmenverbindung ist im Folgenden anhand der beigefügten Zeichnung ausführlich beschrieben. Es zeigt:

Fig. 1 eine perspektivische Darstellung zweier Kanalabschnitte mit einer Rahmenverbindung.

Fig. 2 einen Schnitt durch die in Fig.1 dargestellte Rahmenverbindung.

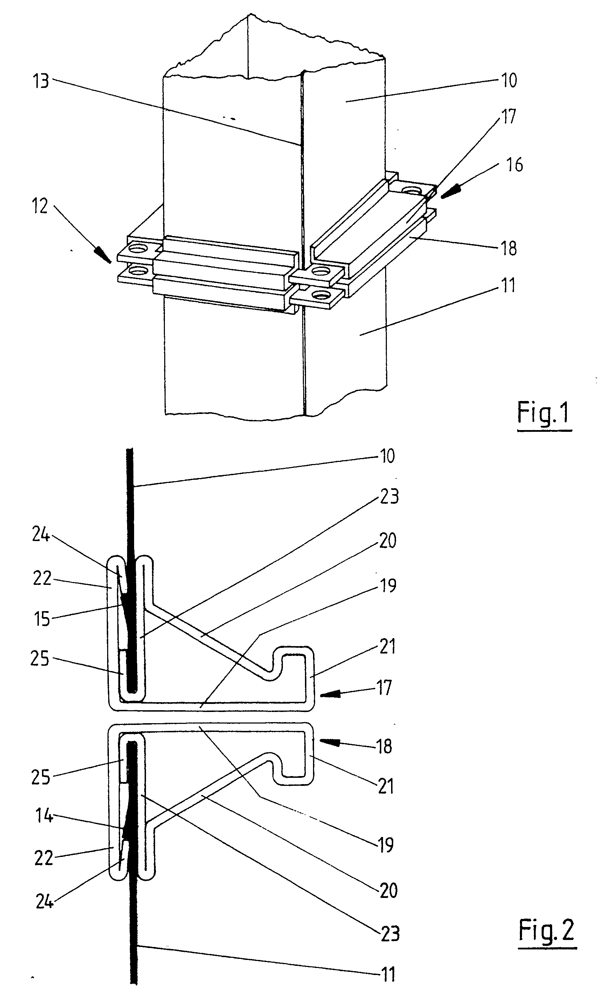

In Fig.1 sind zwei Abschnitte 10 und 11 eines Kanales 12 z.B eines Luftschachtes gezeigt, der aus mehreren Abschnitten zusammengesetzt ist. Jeder dieser Abschnitte 10 und 11 besteht aus einem rechteckigen Stück Blech dessen Enden durch eine Verbindungsnaht 13 miteinander verbunden sind. Diese Naht 13 ist in an sich bekannter Weise ähnlich ausgebildet wie die weiter unten beschriebene Rahmenverbindung. Da diese Naht 13 nicht Gegenstand der vorliegenden Erfindung ist, ist sie hier nicht weiter beschrieben.

Gemäss Fig.2 weisen die benachbarten Enden der Kanalab schnitte 10 und 11 eine Anzahl Nocken auf, von denen jedoch in Fig.2 nur je ein Nocken 14 bzw. 15 dargestellt ist. Diese Nocken 14 und 15 sind mit einem geeignetem Werkzeug in an sich bekannter Weise leicht herstellbar. Es wird insbesondere darauf hingewiesen, dass die Herstellung dieser Nocken 14 und 15 wesentlich einfacher ist, als das bisher übliche Umbiegen der Wandenden zur Bildung eines entsprechenden Falzes für die Rahmenverbindung

Die Rahmenverbindung 16 (Fig.1) besteht aus zwei Profilen 17 und 18 von welchen in Fig.2 ein Querschnitt dargestellt ist. Jedes dieser Profile 17 und 18 besteht aus einem U-förmigen Teil, der die Wandenden der Kanalabschnitte 10 und 11 umgreift. Dieser U-förmige Teil wird durch zwei Schenkel 22 und 23 gebildet, von denen sich der eine Schenkel 22 auf der Innenseite der Kanalabschnitte 10 und 11 befindet und von denen sich der andere Schenkel 23 auf der Aussenseite der Kanalabschnitte 10 und 11 befindet. Diese beiden Schenkel 22,23 sind über zwei Stege 19 und 20 miteinander verbunden, wobei die beiden Stege 19 und 20 ihrerseits über einen dritten Steg 21 miteinander verbunden sind. Der auf der Innenseite des Kanalabschnittes 10 und 11 befindliche Schenkel 22 weist an seinem oberen Ende einen Falz 24 auf an dem sich die erwähnten Nocken 14 bzw 15 abstützen Der auf der Aussenseite des Kanalabschnittes 10,11 befindliche Schenkel 23 weist an seinem unteren Ende einen um das Wandende des Kanalabschnittes 10,11 herumgebogenen Falz 25 auf.

Das Profil 17 bzw 18 kann mit den Schenkeln 22 und 23 über die Wandenden der Kanalabschnitte 10 bzw 11 geschoben werden.

Dank der keilförmigen Ausbildung der Nocken 14 bzw 15 spreizen sich die Schenkel 22 und 23 bis schliesslich der Falz 24 über dem Nocken 14 bzw 15 einrastet. Ein zerstörungsfreies Herausziehen der Profile 17 und 18 aus den Kanalabschnitten 10,11 ist praktisch nicht mehr möglich . Die Qualität der Verbindung hängt aber auch davon ab, wie scharfkantig die Nocken 14 und 15 ausgebildet werden,d.h die Fläche der Nocken 14 und 15 die an der Stirnfläche des Falzes 24 anliegt, soll möglichst parallel zu dieser Fläche sein. Zur Versteifung der Profile 17,18 sind die Stege 19 und 20 nicht parallel angeordnet, sondern der Steg 20 steht schräg zum anderen Steg 19. Eine wesentliche Versteifung wird insbesondere dadurch erreicht,dass der Falz 25 das Wandende des Kanalabschnittes 10,11 umgreift.

**Patentansprüche**

1.Rahmenverbindung(16) für zwei Kanalabschnitte(10,11) eines Kanales(12), insbesondere eines Luftschachtes,mit zwei zusammenschraubbaren Rahmenprofilen(17,18),die an den Enden der Wände der Kanalabschnitte(10,11)befestigbar sind,wobei die Rahmenprofile (17,18) einen im Querschnitt U-förmigen Teil aufweisen, dadurch gekennzeichnet, dass der U-förmige Teil der Rahmenprofile(17,18) der die Wandenden der Kanalabschnitte(10,11) umgreift, aus zwei Schenkeln(22,23) gebildet wird,die beide über zwei Stege(19,20) miteinander verbunden sind,welche ihrerseits über einen Steg(21) miteinander verbunden sind.

2.Rahmenverbindung(16) nach Anspruch 1, dadurch gekennzeichnet, dass der eine Schenkel(22) einen gegen die Wandenden der Kanalabschnitte(10,11) eingebogenen Falz (24) besitzt, der einen Anschlag bildet, und dass an den Wandenden der Kanalabschnitte(10,11) Nocken(14,15) vorhanden sind, welche an dem Falz(24) anliegen, um ein Herausgleiten der Wandenden der Kanalabschnitte(10,11) aus dem im Querschnitt U-förmigen Teil des Rahmenprofiles (17,18) zu verhindern.

3.Rahmenverbindung(16) nach Anspruch 1,dadurch gekennzeichnet, dass der andere Schenkel(23) einen um die Wandenden der Kanalabschnitte(10,11) herumgebogenen Falz(25) besitzt, auf dem sich die Wandenden der Kanal abschnitte(10,11) abstützen.

4.Rahmenverbindung(16) nach Anspruch 1-3, dadurch gekennzeichnet, dass der eine Steg(19) quer zum Wandende der Kanalabschnitte(10,11) und der andere Steg(20) schräg zum Wandende der Kanalabschnitte(10,11) gerichtet ist.

0298912

Fig.1

Fig.2

Europäisches Patentamt

EUROPÄISCHER RECHERCHENBERICHT

Nummer der Anmeldung

EP 88 81 0377

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 132 724 (DUCTMATE INDUSTRIES INC)<br>* Figuren 5,6; Zusammenfassung; Seite 4, Zeile 74-102 *<br>--- | 1-4 | F 16 L 23/00 |
| A | US-A-4 542 923 (F.X. LA CROSSE et al.)<br>* Figur 2 *<br>--- | 1,3,4 | |
| A | DE-U-7 734 366 (G. SMITKA)<br>* Figur 3 *<br>----- | 1,2 | |

| | RECHERCHIERTE SACHGEBIETE (Int. Cl.4) |
|---|---|
| | F 16 L 23/00 |

Der vorliegende Recherchenbericht wurde für alle Patentansprüche erstellt

| Recherchenort | Abschlußdatum der Recherche | Prüfer |
|---|---|---|
| BERLIN | 29-07-1988 | SCHAEFFLER C.A.A. |